# EUROPEAN PATENT APPLICATION

(11) **EP 4 354 773 A1**
(43) Date of publication of application: **17.04.2024**
(21) Application number: 21948898.8
(22) Date of filing: 09.07.2021
(51) Int. Cl.: H04L 1/16

(54) **INFORMATION TRANSMISSION METHOD AND APPARATUS**

(71) Applicant: Huawei Technologies Co., Ltd., Longgang Shenzhen, Guangdong 518129 (CN)
(72) Inventor: GAO, Lei, Shenzhen, Guangdong 518129 (CN); CHENG, Xingqing, Shenzhen, Guangdong 518129 (CN); WANG, Jian, Shenzhen, Guangdong 518129 (CN)
(74) Representative: Körber, Martin Hans
(86) International application number: PCT/CN2021/105618
(87) International publication number: WO 2023/279404

(57) **Abstract**

An information transmission method and apparatus are provided, to reduce feedback overheads of a master node to a slave node. The information transmission method and apparatus are applied to intelligent driving or assisted driving. The method in embodiments of this application includes: Each of a plurality of second nodes sends a first message to a first node. Each second node may send at least one first message, and there are N first messages in total. After receiving the N first messages, the first node may send, in multicast mode on a first resource, a second message that includes N pieces of first feedback information that are in a one-to-one correspondence with the N first messages. Correspondingly, M second nodes may obtain the second message on the first resource. The method in this application may be applied to the internet of vehicles, for example, vehicle-to-everything V2X, long term evolution-vehicle LTE-V, or vehicle-to-vehicle V2V

## Description

### TECHNICAL FIELD

This application relates to the communication field, and in particular, to an information transmission method and apparatus.

### BACKGROUND

Global communication technologies are evolving rapidly. A development speed and application fields of wireless communication technologies have surpassed those of wired communication technologies, showing a vigorous development trend. In a wireless communication scenario including a smart device, a plurality of communication domains may be included in a specific communication area or range. The communication domain is a system including a group of communication nodes having communication relationships and communication connection relationships (namely, communication links) between the communication nodes. One communication domain includes one master communication node (which may be referred to as a master node for short) and at least one slave communication node (which may be referred to as a slave node for short). The master node manages time-frequency resources of the communication domain, and has a function of scheduling resources for the communication links between the communication nodes in the communication domain.

When a plurality of slave nodes transmit data to the master node in parallel, the master node needs to send a feedback data packet for a data packet of each slave node, causing high overheads of separately sending, by the master node, a feedback message to the plurality of slave nodes.

### SUMMARY

This application provides an information transmission method and apparatus, to reduce feedback overheads of a master node to a slave node.

A first aspect of this application provides an information transmission method. The method includes: A first node receives N first messages from M second nodes, where M is an integer greater than 1, and N is an integer greater than or equal to M; and the first node sends a second message to the M second nodes on a first resource, where the second message includes N pieces of first feedback information that are in a one-to-one correspondence with the N first messages.

In the first aspect, the M second nodes send the N first messages to the first node, where each second node separately sends at least one first message. After receiving the N first messages, the first node may send, on the first resource, the second message that includes the N pieces of first feedback information that are in a one-to-one correspondence with the N first messages. Correspondingly, the M second nodes may obtain the second message on the first resource. That is, the first node combines the feedback information corresponding to the M second nodes into one second message. The first node needs to send the second message only once to feed back to the M second nodes, and does not need to separately feed back to each second node. This can reduce feedback overheads of the master node for the slave nodes.

In a possible implementation, the M second nodes are included in a first communication group.

In the foregoing possible implementation, the first communication group may include all slave nodes in a specific communication area, and the M second nodes are some or all of all slave nodes, or the first communication group may include M second nodes selected from all slave nodes in a specific communication area. That is, the first node sends the second message to the M second nodes in a multicast manner.

In a possible implementation, the N pieces of first feedback information include an L*N-bit bitmap, every L bits correspond to one piece of first feedback information, and L is an integer greater than or equal to 1.

In the foregoing possible implementation, the N pieces of first feedback information are transmitted on the first resource in an arrangement of L*N-bit bitmaps, each piece of first feedback information has fixed L bits, and the N pieces of first feedback information have a transmission sequence. The second node may receive the first feedback information on corresponding L bits. This improves feasibility of the solution.

In a possible implementation, the first message includes a data packet and an identifier of the data packet.

In the foregoing possible implementation, the data packet included in the first message sent by the second node to the first node may be empty or not be empty, and the first message further includes the identifier of the data packet. Identifiers are used to distinguish different data packets in messages recently sent by the second node or sent by the second node in different periods. The first node may determine, based on the identifier, whether the data packet is a data packet that needs to be received, to improve transmission efficiency between the first node and the second node.

In a possible implementation, fourth feedback information is one of the N pieces of first feedback information, a fifth message is a first message corresponding to the fourth feedback information, and the fourth feedback information includes at least one of the following information: information indicating that the first node successfully receives a data packet carried in the fifth message; information indicating that the first node fails to receive a data packet carried in the fifth message; information indicating that a data packet carried in the fifth message is expected to be sent again; information indicating that a data packet carried in the fifth message is expected not to be sent again; or an identifier of a data packet expected to be sent.

In the foregoing possible implementation, the information indicating that the first node successfully receives a data packet carried in the fifth message indicates the second node to upload a new data packet. The information indicating that the first node fails to receive a data packet carried in the fifth message indicates the second node to retransmit a data packet carried in the first message corresponding to the fourth feedback information. The information indicating that the data packet carried in the fifth message is expected to be sent again indicates the second node to retransmit the data packet carried in the first message corresponding to the fourth feedback information. The information indicating that the data packet carried in the fifth message is expected not to be sent again indicates the second node to upload a new data packet. The identifier of the data packet expected to be sent indicates whether to retransmit the data packet or send a new data packet, and the second node may retransmit the data packet based on the fourth feedback information or send a new data packet. This improves feasibility of the solution.

In a possible implementation, when the fourth feedback information includes the identifier of the data packet expected to be sent, if the identifier of the data packet expected to be sent is the same as an identifier of the data packet in the fifth message, the fourth feedback information indicates that the data packet carried in the fifth message is expected to be sent again; or if the identifier of the data packet expected to be sent is different from an identifier of the fifth message, the fourth feedback information indicates that the data packet carried in the fifth message is expected not to be sent again.

In the foregoing possible implementation, the first node may use, in the fourth feedback information, the identifier that is the same as the identifier of the data packet in the fifth message to indicate the second node to retransmit the data packet, or may use an identifier that is different from the identifier of the fifth message to indicate the second node to send a new data packet. The identifier can achieve the foregoing effect by using a small quantity of bits. This saves feedback information resources.

In a possible implementation, the method further includes: The first node receives N third messages from the M second nodes; and the first node sends fourth information to the M second nodes on a second resource, where the fourth message includes N pieces of second feedback information that are in a one-to-one correspondence with the N third messages.

In the foregoing possible implementation, the M second nodes may further send N third messages to the first node in another period. Correspondingly, the first node feeds back the N third messages on the second resource. In this application, there is more than one transmission opportunity. This improves feasibility of this solution.

In a possible implementation, that a first node receives N first messages from M second nodes includes: The first node sequentially receives the N first messages in a sorting sequence, where an s^{th} first message in the N first messages is from a third node, the third node is one node in the M second nodes, and s is an integer greater than 0 and less than or equal to N. That the first node receives N third messages from the M second nodes includes: The first node sequentially receives the N third messages in the sorting sequence, where an s^{th} third message in the N third messages is from the third node.

In the foregoing possible implementation, the M second nodes send the N first messages to the first node in the preset sorting sequence, and send the N third messages to the first node in the same sorting sequence, that is, a transmission sequence of the M second nodes in different transmission opportunities does not change, to reduce a quantity of times that the first node sends a resource configuration to the second node.

In a possible implementation, the second message and the N third messages are transmitted on a first time domain resource of a first frequency hopping channel, and the second message is sent before the first node receives the N third messages.

In the foregoing possible implementation, this application is applied to frequency hopping communication. On the first time domain resource of the first frequency hopping channel, the first node first sends the second message, and then receives the N third messages sent by the M second nodes. The second message may provide a basis for the M second nodes to determine the N third messages. This improves feasibility of the solution. In a time adjacent to a same frequency hopping channel, a channel and an interference condition are similar, and a success rate of sending by the second node that receives the second message on the same frequency hopping channel is higher. This improves transmission efficiency. Even if the second node that does not receive the second message sends a third message, a transmission success rate is low. Optionally, the second node may not send the corresponding third message, to reduce power consumption.

In a possible implementation, the N third messages are determined based on the N pieces of first feedback information that are in a one-to-one correspondence in the second message; and when the fourth feedback information includes the information indicating that the first node successfully receives the data packet carried in the fifth message, a third message corresponding to the fourth feedback information includes a data packet different from the data packet in the fifth message; or when the fourth feedback information includes the information indicating that the first node fails to receive the data packet carried in the fifth message, a third message corresponding to the fourth feedback information includes the data packet in the fifth message; or when the fourth feedback information includes the information indicating that the data packet carried in the fifth message is expected to be sent again, a third message corresponding to the fourth feedback information includes the data packet in the fifth message; or when the fourth feedback information includes the information indicating that the data packet carried in the fifth message is expected not to be sent again, a third message corresponding to the fourth feedback information includes a data packet different from the data packet in the fifth message; or when the fourth feedback information includes the identifier of the data packet expected to be sent, a third message corresponding to the fourth feedback information includes a data packet corresponding to the identifier of the data packet expected to be sent.

In the foregoing possible implementation, after receiving the second message on the first resource, the second node determines, based on the first feedback information that is in the second message and that corresponds to the first message sent by the second node, whether to retransmit the data packet sent in a previous period or upload a new data packet, and correspondingly send a third message to the first node, where the third message includes the data packet determined based on the first feedback information. This improves feasibility of the solution.

In a possible implementation, the first message includes a first part, a second part, and a data part, where the first part is used to transmit a predefined or preconfigured signal, and/or carry a predefined or preconfigured sequence, the second part includes the identifier of the data packet carried in the first message, and the data part includes the data packet carried in the first message. The second message sequentially includes a third part and a fourth part, where the third part is used to transmit a predefined or preconfigured signal, and/or carry a predefined or preconfigured sequence, and the fourth part includes the N pieces of first feedback information.

In the foregoing possible implementation, the first message sequentially includes the first part, the second part, and the data part, and a structure of a signal transmitted by the second node is provided. The first part transmits a predefined or preconfigured signal and/or carries a predefined or preconfigured sequence, and is used by the first node to perform an automatic gain control (automatic gain control, AGC) function, synchronization, channel estimation, and the like. The second part includes control information and a cyclic redundancy check bit of the control information. If the transmission includes data or signaling, the transmission includes a data part, and the data part is used to carry the data or signaling. The second message sequentially includes a third part and a fourth part. The third part transmits a predefined or preconfigured signal and/or carries a predefined or preconfigured sequence, and is used by a receive end to perform AGC, synchronization, channel estimation, and the like. The fourth part includes control information and a cyclic redundancy check bit of the control information, where the control information includes N pieces of first feedback information corresponding to the N first messages. The second message does not include the data part, and may provide more resource space for transmitting the feedback information, to support a larger scale of the second node user group.

In a possible implementation, a sixth message is a k^{th} first message in the N first messages, a seventh message is a k^{th} third message in the N third messages, and k is an integer greater than 0 and less than or equal to N; and if a data packet carried in the sixth message is the same as a data packet carried in the seventh message, an identifier of the data packet carried in the sixth message is the same as an identifier of the data packet carried in the seventh message; or if a data packet carried in the sixth message is different from a data packet carried in the seventh message, an identifier of the data packet carried in the sixth message is different from an identifier of the data packet carried in the seventh message.

In the foregoing possible implementation, when the second node retransmits the data packet, the identifier of the data packet carried in the seventh message is the same as the identifier of the data packet in the sixth message sent by the second node in the previous transmission opportunity. When the second node sends a new data packet, the identifier of the data packet carried in the seventh message is different from the identifier of the data packet in the sixth message sent by the second node in the previous transmission opportunity, and the identifier may use fewer bits to achieve the foregoing effect. This saves feedback information resources.

In a possible implementation, the method further includes: The first node sends an eighth message to the M second nodes, where the eighth message includes first indication information, and the first indication information indicates resources for sending the N first messages by the M second nodes and a resource for sending the second message by the first node.

In the foregoing possible implementation, the first node sends the eighth message once in a multicast manner, where the first indication information in the eighth message may indicate the resources of the M second nodes in a transmission opportunity and the resource on which the first node transmits the second message, and the first node needs to send the eighth message only once. Consumption of resource configuration signaling of the first node is reduced.

In a possible implementation, a resource for each of the N pieces of first feedback information is indicated by a sequence number of a first message corresponding to each piece of first feedback information in the N first messages.

In the foregoing possible implementation, resources for the M second nodes in the transmission opportunity have corresponding sequence numbers, that is, each second node has its own sequence number, and the M second nodes send the N first messages based on the sequence numbers. Correspondingly, when the first node sends the N pieces of first feedback information, a sequence of the N pieces of first feedback information is arranged based on sequence numbers on which the N first messages are based, and sequence numbers of the resources for the N pieces of first feedback information correspond to sequence numbers of the resources for sending the N first messages by the second node. This improves feasibility of the solution.

In a possible implementation, the method further includes: The first node sends an eighth message to each of the M second nodes, where the eighth message includes first indication information, the first indication information indicates a resource for sending a ninth message by a fourth node and a resource for first feedback information that corresponds to the ninth message, the fourth node is a second node that receives the eighth message, and the ninth message is one of at least one first message sent by the fourth node.

In the foregoing possible implementation, the first node sends the eighth message to each second node in a unicast manner, and the first indication information in the eighth message separately indicates a resource for sending the first message by the second node that receives the eighth message and a resource for the first feedback information that is fed back by the first node based on the first message sent by the second node that receives the eighth message, so that feasibility of the solution can be improved.

In a possible implementation, the resource for the first feedback information that corresponds to the ninth message is indicated based on a sequence number of the ninth message in the N first messages.

In the foregoing possible implementation, resources for the M second nodes in the transmission opportunity have corresponding sequence numbers, that is, each second node has its own sequence number, and the M second nodes send the N first messages based on the sequence numbers. Correspondingly, when the first node sends the N pieces of first feedback information, a sequence of the N pieces of first feedback information is arranged based on sequence numbers on which the N first messages are based, and sequence numbers of the resources for the N pieces of first feedback information correspond to sequence numbers of the resources for sending the N first messages by the second node. This improves feasibility of the solution.

A second aspect of this application provides an information transmission method, where the method includes: A second node sends at least one first message to a first node; and the second node receives a second message from the first node on a first resource, where the second message includes N pieces of first feedback information that are in a one-to-one correspondence with N first messages, the N first messages are from M second nodes, M is an integer greater than 1, N is an integer greater than or equal to M, and the N pieces of first feedback information are determined by the first node based on the N first messages.

In the second aspect, the M second nodes send the N first messages to the first node, where each second node separately sends at least one first message. After receiving the N first messages, the first node may send, on the first resource, the second message that includes the N pieces of first feedback information that are in a one-to-one correspondence with the N first messages. Correspondingly, the M second nodes may obtain the second message on the first resource. That is, the first node needs to send the second message only once to feed back to the M second nodes. This reduces feedback overheads of the master node to the slave nodes.

In a possible implementation, the M second nodes are included in a first communication group.

In a possible implementation, the N pieces of first feedback information correspond to an L *N-bit bitmap, every L bits correspond to one piece of first feedback information, and L is an integer greater than or equal to 1.

In a possible implementation, the first message includes a data packet and an identifier of the data packet.

In a possible implementation, fourth feedback information is one of the N pieces of first feedback information, a fifth message is a first message corresponding to the fourth feedback information, and the fourth feedback information includes at least one of the following information: information indicating that the first node successfully receives a data packet carried in the fifth message; information indicating that the first node fails to receive a data packet carried in the fifth message; information indicating that a data packet carried in the fifth message is expected to be sent again; information indicating that a data packet carried in the fifth message is expected not to be sent again; or an identifier of a data packet expected to be sent.

In a possible implementation, when the fourth feedback information includes the identifier of the data packet expected to be sent, if the identifier of the data packet expected to be sent is the same as an identifier of the data packet in the fifth message, the fourth feedback information indicates that the data packet carried in the fifth message is expected to be sent again; or if the identifier of the data packet expected to be sent is different from an identifier of the fifth message, the fourth feedback information indicates that the data packet carried in the fifth message is expected not to be sent again.

In a possible implementation, the method further includes: The second node sends at least one third message to the first node; and the second node receives a fourth message from the first node on the first resource, where the fourth message includes N pieces of second feedback information that are in a one-to-one correspondence with N third messages, and the N third messages are from the M second nodes.

In a possible implementation, that a second node sends at least one first message to a first node includes: The second node sends the at least one first message to the first node in a sorting sequence. That the second node sends at least one third message to the first node includes: The second node sends the at least one third message to the first node in the sorting sequence, where a sequence number of the at least one third message in the N third messages is the same as a sequence number of the at least one first message in the N first messages.

In a possible implementation, the second message and the N third messages are transmitted on a first time domain resource of a first frequency hopping channel, and the at least one third message is sent after the second node receives the second message.

In a possible implementation, the N third messages are determined based on the N pieces of first feedback information that are in a one-to-one correspondence in the second message; and when the fourth feedback information includes the information indicating that the first node successfully receives the data packet carried in the fifth message, a third message corresponding to the fourth feedback information includes a data packet different from the data packet in the fifth message; or when the fourth feedback information includes the information indicating that the first node fails to receive the data packet carried in the fifth message, a third message corresponding to the fourth feedback information includes the data packet in the fifth message; or when the fourth feedback information includes the information indicating that the data packet carried in the fifth message is expected to be sent again, a third message corresponding to the fourth feedback information includes the data packet in the fifth message; or when the fourth feedback information includes the information indicating that the data packet carried in the fifth message is expected not to be sent again, a third message corresponding to the fourth feedback information includes a data packet different from the data packet in the fifth message; or when the fourth feedback information includes the identifier of the data packet expected to be sent, a third message corresponding to the fourth feedback information includes a data packet corresponding to the identifier of the data packet expected to be sent.

In a possible implementation, the first message includes a first part, a second part, and a data part, where the first part is used to transmit a predefined or preconfigured signal, and/or carry a predefined or preconfigured sequence, the second part includes the identifier of the data packet carried in the first message, and the data part includes the data packet carried in the first message. The second message sequentially includes a third part and a fourth part, where the third part is used to transmit a predefined or preconfigured signal, and/or carry a predefined or preconfigured sequence, and the fourth part includes the N pieces of first feedback information.

In a possible implementation, a sixth message is a k^{th} first message in the N first messages, a seventh message is a k^{th} third message in the N third messages, and k is an integer greater than 0 and less than or equal to N; and if a data packet carried in the sixth message is the same as a data packet carried in the seventh message, an identifier of the data packet carried in the sixth message is the same as an identifier of the data packet carried in the seventh message; or if a data packet carried in the sixth message is different from a data packet carried in the seventh message, an identifier of the data packet carried in the sixth message is different from an identifier of the data packet carried in the seventh message.

In a possible implementation, the method further includes: The second node receives an eighth message from the first node, where the eighth message includes first indication information, and the first indication information indicates resources for sending the N first messages by the M second nodes and a resource for sending the second message by the first node.

In a possible implementation, a resource for each of the N pieces of first feedback information is indicated by a sequence number of a first message corresponding to each piece of first feedback information in the N first messages.

In a possible implementation, the method further includes: The second node receives an eighth message from the first node, where the eighth message includes first indication information, the first indication information includes a resource for sending a ninth message by the second node and a resource for first feedback information that corresponds to the ninth message, and the ninth message is one of the at least one first message.

In a possible implementation, the resource for the first feedback information that corresponds to the ninth message is indicated by a sequence number of the ninth message in the N first messages.

A third aspect of embodiments of this application provides an information transmission apparatus, including: a receiving unit, configured to receive N first messages from M second nodes, where M is an integer greater than 1, and N is an integer greater than or equal to M; and a sending unit, configured to send, by the first node, a second message to the M second nodes on a first resource, where the second message includes N pieces of first feedback information that are in a one-to-one correspondence with the N first messages.

The information transmission apparatus is configured to perform the method in any one of the first aspect or the implementations of the first aspect.

A fourth aspect of embodiments of this application provides an information transmission apparatus, including: a sending unit, configured to send at least one first message to a first node; and a receiving unit, configured to receive a second message from the first node on a first resource, where the second message includes N pieces of first feedback information that are in a one-to-one correspondence with N first messages, the N first messages are from M apparatuses, M is an integer greater than 1, N is an integer greater than or equal to M, and the N pieces of first feedback information are determined by the first node based on the N first messages.

The information transmission apparatus is configured to perform the method in any one of the second aspect or the implementations of the second aspect.

A fifth aspect of this application provides a computer-readable storage medium. The computer-readable storage medium stores a program. When a computer executes the program, the method provided in any one of the first aspect or the optional manners of the first aspect is performed.

A sixth aspect of this application provides a computer-readable storage medium. The computer-readable storage medium stores a program. When a computer executes the program, the method provided in any one of the second aspect or the optional manners of the second aspect is performed.

A seventh aspect of this application provides a computer program product. When the computer program product is executed on a computer, the computer performs the method provided in any one of the first aspect or the optional manners of the first aspect.

An eighth aspect of this application provides a computer program product. When the computer program product is executed on a computer, the computer performs the method provided in any one of the second aspect or the optional manners of the second aspect.

### BRIEF DESCRIPTION OF DRAWINGS

FIG. 1 is a schematic diagram of a structure of a communication distribution system according to an embodiment of this application;
FIG. 2 shows a topological relationship of an in-vehicle wireless communication link according to an embodiment of this application;
FIG. 3 is a schematic diagram of an embodiment of an information transmission method according to an embodiment of this application;
FIG. 4 is a schematic diagram of a structure of an information transmission apparatus according to an embodiment of this application;
FIG. 5 is another schematic diagram of a structure of an information transmission apparatus according to an embodiment of this application;
FIG. 6 is a schematic diagram of a structure of a communication device according to an embodiment of this application; and
FIG. 7 is another schematic diagram of a structure of a communication device according to an embodiment of this application.

### DESCRIPTION OF EMBODIMENTS

Embodiments of this application provide an information transmission method and apparatus, to reduce feedback overheads of a master node to a slave node.

The following describes embodiments of this application with reference to accompanying drawings. It is clear that the described embodiments are merely some but not all of embodiments of this application. A person of ordinary skill in the art may learn that, with development of technologies and emergence of a new scenario, technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances, so that embodiments of the present invention described herein can be implemented in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

"At least one" means one or more, and "a plurality of" means two or more. "And/Or" is an association relationship for describing associated objects, and indicates that three relationships may exist. For example, A and/or B may indicate the following cases: Only A exists, both A and B exist, and only B exists, where A and B may be in a singular form or a plural form. The character "/" generally indicates an "or" relationship between the associated objects. "At least one item (piece) of the following" or a similar expression thereof means any combination of these items, including a singular item (piece) or any combination of plural items (pieces). For example, at least one of a, b, or c may indicate a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, and are not intended to limit sizes, content, an order, a time sequence, priorities, importance degrees, or the like of the plurality of objects. For example, first configuration information and second configuration information are only names given for ease of description, and the two pieces of configuration information may be same configuration information, or may be different configuration information. Names such as "first" and "second" are not intended to indicate that the two pieces of configuration information are different in an amount, content, a sending sequence, a priority, importance, or the like.

The information transmission apparatus in embodiments of this application may be a vehicle-mounted device, for example, a head unit, an in-vehicle speaker, or an in-vehicle microphone, or may be an electronic device, for example, a mobile phone, a tablet computer, a desktop computer, a laptop, a notebook computer, an ultra-mobile personal computer (ultra-mobile personal computer, UMPC), a handheld computer, a netbook, a personal digital assistant (personal digital assistant, PDA), a wearable electronic device, or a virtual reality device.

The following first describes some terms in embodiments of this application, to help a person skilled in the art have a better understanding.
(1) Cockpit domain controller (cockpit domain controller or control domain cockpit, CDC): The cockpit domain controller is referred to as a head unit for short. In addition to conventional radio, music and video playing, and navigation functions, the current head unit provides cellular communication functions (3G and 4G), and can implement information communication between people and a vehicle and between the vehicle and the outside world by using a CAN-BUS technology of the vehicle. This improves user experience and enhances service and security related functions.
(2) Master node and slave node: Two types of nodes are logically classified into the master node and the slave node. The master node manages the slave node, has a resource allocation function, and is responsible for allocating resources to the slave node. The slave node communicates with the master node based on scheduling of the master node by using the resources allocated by the master node. The nodes may be various apparatuses. For example, the master node is a mobile phone, the slave node is a headset. The mobile phone establishes a communication connection to the headset to implement data exchange. The mobile phone manages the headset. The mobile phone has a resource allocation function, and may allocate resources to the headset.
(3) Communication domain: The communication domain is a system including a group of communication nodes having a communication relationship and a communication connection relationship between the communication nodes. One apparatus or device may be in a plurality of communication domains. For example, when a mobile phone performs wireless communication with a headset, the mobile phone is in a communication domain a including the mobile phone and the headset. In the communication domain a, the mobile phone is a master node, and the headset is a slave node. Then, after the mobile phone detects a CDC and establishes a wireless connection to the CDC, the mobile phone is also in a communication domain b including the mobile phone and the CDC. In the communication domain b, the CDC is a master node, the mobile phone is a slave node, and the mobile phone follows scheduling of the CDC. The communication domain b may further include other slave nodes such as a vehicle-mounted sound box and a microphone.

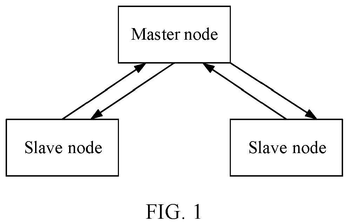

Refer to a schematic diagram of a structure of a communication distribution system shown in FIG. 1. The communication distribution system may include a master node and two slave nodes. The master node and the slave nodes may exchange messages, the slave nodes send a message to the master node, and the master node may respond to the messages of the slave nodes.

It may be understood that one master node and two slave nodes are shown in the figure. However, in an actual scenario, there may be more master nodes or more slave nodes. A specific quantity depends on the actual scenario, and is not limited herein.

A wireless communication scenario to which embodiments of this application are applied may include a wide area wireless communication, for example, a communication between a plurality of network devices and a plurality of user equipments (user equipment, UE), where the network device is used as a master node, the UE is used as a slave node. The network device allocates a resource to the UE, and the UE obeys scheduling of the network device. Alternatively, the wireless communication scenario may include a short-range wireless communication, for example, in an in-vehicle wireless communication scenario, for example, a communication between a CDC and each of a vehicle-mounted sound box, a vehicle-mounted microphone, and a mobile phone, or a communication between a mobile phone and a wearable device, for example, a headset. Alternatively, the wireless communication scenario may include a wireless local area communication, for example, a communication between a plurality of access points (access point, AP) and a plurality of stations (station).

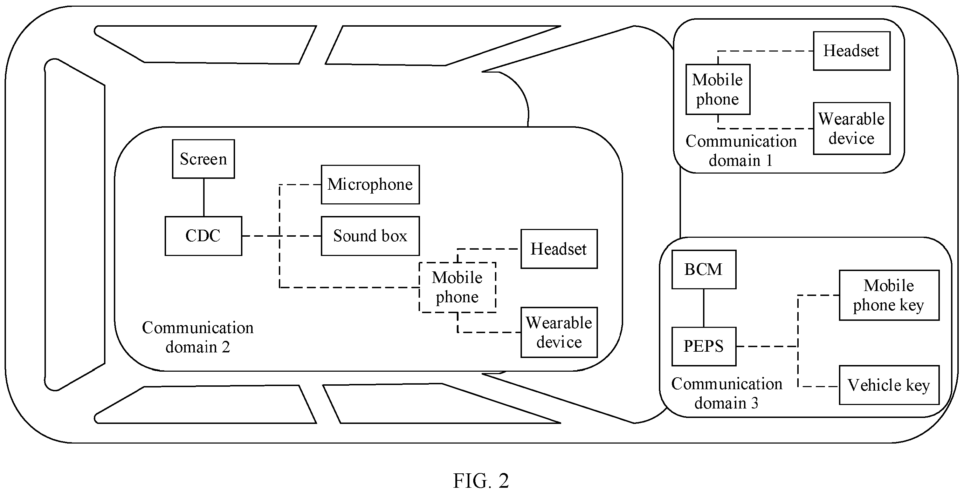

Generally, a topology relationship of an in-vehicle wireless communication link is shown in FIG. 2. It can be learned from FIG. 2 that there are a plurality of communication domains in a vehicle. One communication domain includes one master node and at least one slave node. The master node schedules the slave node, so that the master node and the slave node transmit service data to each other. For example, in FIG. 2, a mobile phone, a headset, and a wearable device belong to a communication domain, for example, referred to as a communication domain 1, where the mobile phone is a master node, and the headset and the wearable device are slave nodes. A CDC, a display, a microphone, and a sound box belong to a communication domain, for example, referred to as a communication domain 2, where the CDC is a master node, and the display, the microphone, and the sound box are slave nodes. A passive entry passive start (passive entry passive start, PEPS) system, a body control module (body control module, BCM), a mobile phone key, and a vehicle key belong to a communication domain, for example, referred to as a communication domain 3, where the PEPS system is a master node, and the BCM, the mobile phone key, and the vehicle key are slave nodes. In addition, a master node in a communication domain may also be used as a slave node in another communication domain. For example, the mobile phone in the communication domain 1 may be used as a slave node in the communication domain 2. Alternatively, the communication domain may be defined from a perspective of a resource. For example, a resource that is allocated by a node and that is used by the node to communicate with another node may be referred to as a communication domain. In this case, the node is a master node in the communication domain, and the another node that communicates with the node by using the communication domain (resource) is a slave node in the communication domain.

A wireless communication technology supports parallel transmission from a plurality of slave nodes to a master node. For example, a plurality of microphones simultaneously transmit collected audio data to an audio processing device. However, when the plurality of slave nodes concurrently transmit data packets to the master node, the master node needs to separately send feedback information for a data packet of each slave node. As a result, feedback overheads of the master node are high.

To resolve the problem, an embodiment of this application provides an information transmission method. The method is described as follows.

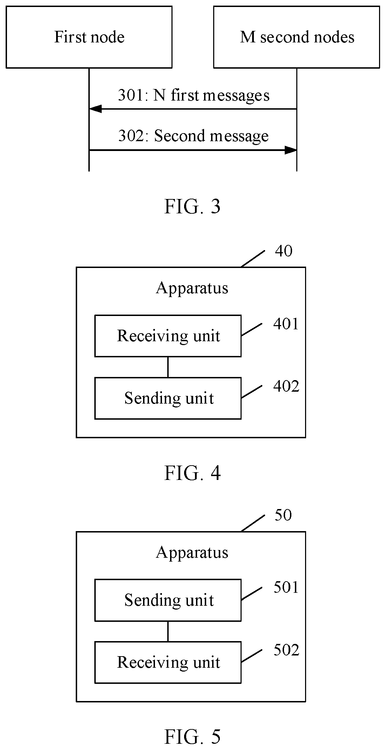

Refer to FIG. 3. FIG. 3 shows an embodiment of an information transmission method according to an embodiment of this application. The method includes the following steps.

301: M second nodes send N first messages to a first node.

A communication distribution system in this embodiment of this application is applicable to information transmission between a master node and one or more slave nodes in a communication domain. The communication domain includes one first node and the M second nodes. Both the first node and a second node may be slave nodes. Alternatively, the first node may be a master node, and the second node is a slave node. This is not limited in this embodiment. In this embodiment of this application, that the first node is a master node and the second node is a slave node is used as an example. M is an integer greater than or equal to 1, and N is an integer greater than or equal to M. In other words, each second node in the M second nodes sends one or more first messages to the first node, and there are N first messages in total.

When M is equal to 1, the communication domain includes one first node and one second node, and the second node may send a plurality of first messages to the first node.

Optionally, the M second nodes are included in a first communication group. Specifically, the first communication group may include all slave nodes in the communication domain, and the M second nodes may be all or some slave nodes in the first communication group. The first communication group may alternatively include some slave nodes selected from the communication domain. In this case, the first communication group completely includes the M second nodes. For example, a plurality of microphones in a conference site simultaneously transmit collected audio data to an audio processing device. When the first communication group is all microphones in the conference site, the M second nodes are all the microphones in the conference site or microphones that do not need to be used (or that send an empty data packet) in the conference site. Alternatively, the first node may directly select some microphones from the microphones in the conference site to form the first communication group. Composition of the first communication group is not limited in this embodiment of this application.

302: The first node sends a second message to the M second nodes on a first resource.

In this embodiment of this application, if the first node receives the N first messages, the first node may determine N pieces of corresponding first feedback information based on a result of receiving the N first messages, that is, the first messages are in a one-to-one correspondence with the pieces of first feedback information. The first node may send the second message on the first resource. The first resource includes resources of the N pieces of first feedback information in the configuration signaling, and the second message also includes the N pieces of first feedback information for the N first messages. Correspondingly, each second node in the M second nodes may receive, on the first resource, first feedback information corresponding to a first message sent by each second node. Optionally, the first node may further send the second message on the first resource for a plurality of times, to improve reliability of the second message received by the second node.

Optionally, the N pieces of first feedback information correspond to an L*N-bit bitmap, every L bits correspond to one piece of first feedback information, and L is an integer greater than or equal to 1. Specifically, the first resource configured by the first node includes an L*N-bit bitmap (bitmap), and every L bits correspond to one piece of first feedback information. In other words, each piece of first feedback information needs to be transmitted on L bits corresponding to the first feedback information. Correspondingly, the second node may also receive the first feedback information on corresponding L bits.

Optionally, the first message includes a data packet and an identifier of the data packet. Specifically, the first message sent by the second node to the first node may include a data packet, and the data packet may be empty. The first message further includes an identifier, where the identifier may be 1 bit. "0" indicates that the data packet is the same as the data packet sent in the previous period. "1" indicates that the data packet is different from the data packet sent in the previous period. The identifier may alternatively be a bit string, and may identify a plurality of data packets. Data packets within a specific data amount range have different identifiers.

Optionally, fourth feedback information is one of the N pieces of first feedback information, a fifth message is a first message corresponding to the fourth feedback information, and the fourth feedback information includes at least one of the following information: information indicating that the first node successfully receives a data packet carried in the fifth message; information indicating that the first node fails to receive a data packet carried in the fifth message; information indicating that a data packet carried in the fifth message is expected to be sent again; information indicating that a data packet carried in the fifth message is expected not to be sent again; or an identifier of a data packet expected to be sent.

Specifically, the data packet carried by the first message corresponding to the fourth feedback information is used to carry service data and/or higher layer signaling. Herein, the information indicating that the first node successfully receives a data packet carried in the fifth message indicates the second node to upload a new data packet. The information indicating that the first node fails to receive a data packet carried in the fifth message indicates the second node to retransmit a data packet carried in the first message corresponding to the fourth feedback information. The information indicating that the data packet carried in the fifth message is expected to be sent again indicates the second node to retransmit the data packet carried in the first message corresponding to the fourth feedback information. The information indicating that the data packet carried in the fifth message is expected not to be sent again indicates the second node to upload a new data packet. The identifier of the data packet expected to be sent indicates whether to retransmit the data packet or send a new data packet.

An acknowledgment (acknowledgment, ACK) character may be used to indicate that the first node successfully receives the data packet carried in the fifth message. The second node uploads a new data packet after receiving the ACK. The second node uploads the data packet carried in the fifth message if the second node does not receive the ACK.

Alternatively, a negative acknowledgment (negative acknowledgment, NACK) character may be used to indicate that the first node fails to receive the data packet carried in the first message corresponding to the fourth feedback information. When receiving the NACK, the second node retransmits the data packet carried in the first message corresponding to the fourth feedback information. If no NACK message is received, the second node uploads a new data packet.

Alternatively, 0 may be used to indicate that the second node is expected to send again the data packet carried in the first message corresponding to the fourth feedback information, and 1 may be used to indicate that the second node is expected not to send the data packet carried in the first message corresponding to the fourth feedback information.

Alternatively, a next expected sequence number (next expected sequence number, NESN) may be used to indicate the identifier of the data packet that is expected to be sent by the second node after receiving the second message.

Optionally, when the fourth feedback information includes the identifier of the data packet expected to be sent, if the identifier of the data packet expected to be sent is the same as an identifier of the data packet in the fifth message, the fourth feedback information indicates that the data packet carried in the fifth message is expected to be sent again, and the fifth message is the first message corresponding to the fourth feedback information; or if the identifier of the data packet expected to be sent is different from an identifier of the fifth message, the fourth feedback information indicates that the data packet carried in the fifth message is expected not to be sent again.

For example, if an identifier of the data packet carried in the first message is 123, and an NESN in the fourth feedback information is 256, it indicates that the first node has received the data packet whose identifier is 123, and the second node needs to transmit the data packet whose identifier is 256.

Optionally, the first node receives N third messages from the M second nodes. The first node sends a fourth message to the M second nodes on a second resource, where the fourth message includes N pieces of second feedback information that are in a one-to-one correspondence with the N third messages. Specifically, for a period different from the period in which the first message is located, the M second nodes may further send the N third messages to the first node in another period, so that the first node determines, based on the N third messages, the N pieces of second feedback information that are in a one-to-one correspondence with the N third messages, and transmits, on the second resource, the fourth message including the N pieces of second feedback information.

Optionally, the first node sequentially receives the N first messages in a sorting sequence, where an s^{th} first message in the N first messages is from a third node, the third node is one node in the M second nodes, and s is an integer greater than 0 and less than or equal to N. The first node sequentially receives the N third messages in the sorting sequence, where an s^{th} third message in the N third messages is from the third node. The M second nodes send the N first messages to the first node in the preset sorting sequence, and send the N third messages to the first node in the same sorting sequence, that is, a transmission sequence of the M second nodes in different transmission opportunities does not change. That is, a resource position at which each second node transmits a message in each period does not change.

Optionally, the N third messages are determined based on the second message; and when the fourth feedback information includes the information indicating that the first node successfully receives the data packet carried in the fifth message, a third message corresponding to the fourth feedback information includes a data packet different from the data packet in the fifth message; or when the fourth feedback information includes the information indicating that the first node fails to receive the data packet carried in the fifth message, a third message corresponding to the fourth feedback information includes the data packet in the fifth message; or when the fourth feedback information includes the information indicating that the data packet carried in the fifth message is expected to be sent again, a third message corresponding to the fourth feedback information includes the data packet in the fifth message; or when the fourth feedback information includes the information indicating that the data packet carried in the fifth message is expected not to be sent again, a third message corresponding to the fourth feedback information includes a data packet different from the data packet in the fifth message; or when the fourth feedback information includes the identifier of the data packet expected to be sent, a third message corresponding to the fourth feedback information includes a data packet corresponding to the identifier of the data packet expected to be sent.

Specifically, after receiving the second message on the first resource, the second node determines, based on the first feedback information that is in the second message and that corresponds to the first message sent by the second node, whether to retransmit the data packet sent in a previous period or transmit a new data packet, and correspondingly send a third message to the first node, where the third message includes the data packet determined based on the first feedback information.

Optionally, the second message and the N third messages are transmitted on a first time domain resource of a first frequency hopping channel, and the second message is sent before the first node receives the N third messages. Specifically, this embodiment of this application is applied to frequency hopping communication. The first time domain resource unit is one transmission opportunity or one subevent (Subevent). The first node may first receive the N third messages from the M second nodes, and then send the fourth message on the second resource. Alternatively, in one transmission opportunity, after the first node sends the second message on the first resource, the M second nodes send the N third messages to the first node based on the second message. In this embodiment of this application, for example, in one transmission opportunity, the first node first sends the second message on the first resource, and the M second nodes send the N third messages to the first node. A structure of the first time domain resource unit may provide synchronization reference for the second node that has a same transmission opportunity. For example, as shown in Table 1, G1, T1, T2, and T3 are sequentially transmitted in Subevent 1, and G2, T4, T5, and T6 are sequentially transmitted in Subevent 2. G1 is generated by the first node based on feedback information determined based on a message received in a time domain resource unit before Subevent 1, and T1, T2, and T3 are messages determined by the three second nodes based on G1 and sent to the first node separately. G2 is a message determined by the first node based on T1, T2, and T3, and T4, T5, and T6 are three messages determined by the second nodes based on G2 and sent to the first node respectively. There is a gap between transmission resources in the subevent, and details are not described herein again.

**Table 1**

| Subevent 1 | | | | Subevent 2 | | | |
|---|---|---|---|---|---|---|---|
| G1 | T1 | T2 | T3 | G2 | T4 | T5 | T6 |

Optionally, the first message includes a first part, a second part, and a data part, where the first part is used to transmit a predefined or preconfigured signal, and/or carry a predefined or preconfigured sequence, the second part includes the identifier of the data packet carried in the first message, and the data part includes the data packet carried in the first message. The second message sequentially includes a third part and a fourth part, where the third part is used to transmit a predefined or preconfigured signal, and/or carry a predefined or preconfigured sequence, and the fourth part includes the N pieces of first feedback information.

Specifically, as shown in Table 2, the first message sequentially includes the first part, the second part, and the data part, and a structure of a signal transmitted by the second node is provided. The first part transmits a predefined or preconfigured signal and/or carries a predefined or preconfigured sequence, and is used by the first node to perform AGC, synchronization, channel estimation, and the like. The second part includes control information and a cyclic redundancy check bit of the control information. If the transmission includes data or signaling, the transmission includes a data part, and the data part is used to carry the data or signaling. Optionally, the data part may be empty, or the data or signaling carried in the data part is empty. The control information includes an identifier of a data packet transmitted this time. The identifier may be a sequence number (sequence number, SN). The first node may determine, with reference to an SN of a data packet transmitted in a previous subevent at a resource position of the first message, whether a packet is lost, whether retransmission and combination are performed, or the like.

**Table 2**

| | | |
|---|---|---|
| First part | Second part | Data part |

As shown in Table 3, the second message sequentially includes a third part and a fourth part. The third part transmits a predefined or preconfigured signal and/or carries a predefined or preconfigured sequence, and is used by a receive end to perform AGC, synchronization, channel estimation, and the like. The fourth part includes control information and a cyclic redundancy check bit of the control information, where the control information includes N pieces of first feedback information corresponding to the N first messages. In this embodiment of this application, feedback transmission of the first node does not include data, and the second message sequentially includes a third part and a fourth part. Therefore, the control information does not need to include a data-related indication, for example, a modulation and coding scheme or a length. In this way, more control information bits may be used to transmit the feedback information, to support a larger user group size on the second node.

**Table 3**

| | |
|---|---|
| Third part | Fourth part |

Optionally, a sixth message is a k^{th} first message in the N first messages, a seventh message is a k^{th} third message in the N third messages, and k is an integer greater than 0 and less than or equal to N; and if a data packet carried in the sixth message is the same as a data packet carried in the seventh message, an identifier of the data packet carried in the sixth message is the same as an identifier of the data packet carried in the seventh message; or if a data packet carried in the sixth message is different from a data packet carried in the seventh message, an identifier of the data packet carried in the sixth message is different from an identifier of the data packet carried in the seventh message. For example, if a data packet transmitted this time is the same as a data packet transmitted in a same sequence as a previous subevent, the identifier does not change; otherwise, identifier=(identifier of transmission in a corresponding sequence of a previous subevent+1)mod(2ⁿ), n is a quantity of identifier bits, and optionally, n=1. Optionally, the identifier may alternatively be a bit character whose length is greater than 1, and is used to distinguish a plurality of data packets. This is not limited in this embodiment of this application. An identifier indicates a relationship of whether data packets transmitted in a same sequence in two periods are retransmitted, and an additional sequence does not need to be indicated, thereby simplifying indication and reducing control information overheads.

When the first node is a master node, the first node may send, to the second node, configuration signaling for configuring a resource on which the first message is transmitted. Optionally, the first node may send the configuration signaling to the M second nodes in multicast mode, and the first node sends the eighth message to the M second nodes. The eighth message includes first indication information, and the first indication information indicates resources for sending the N first messages by the M second nodes and a resource for sending the second message by the first node. Specifically, the eighth message is the configuration signaling, and the first indication information of the eighth message also indicates transmission resources (resources) for sending the N first messages by the M second nodes, that is, the first node does not need to separately send the configuration signaling to each second node. A resource position for transmitting a message by each second node in each transmission opportunity (transmission period) is unchanged, that is, a corresponding sequence number is provided. The sequence number may be directly indicated by the first node, or may be indicated in another manner. For example, a transmission sequence of the first message is directly determined based on a resource position.

Optionally, a resource for each of the N pieces of first feedback information is indicated by a sequence number of a first message corresponding to each piece of first feedback information in the N first messages. Specifically, the first node sequentially receives the first messages of the second node in a sequence of resource positions indicated by the first indication information, and transmits, on the resource for the second message, the first feedback information corresponding to the first message at each resource position based on a sequence number of the resource position indicated by the first indication information.

When the first node is a master node, the first node sends, to the second node, configuration signaling for configuring a resource on which the first message is transmitted. Optionally, the transmission resource configured by the first node for the M second nodes may be sent in unicast mode. The first node sends an eighth message to each second node in the M second nodes, where the eighth message includes first indication information, the first indication information indicates a resource for sending a ninth message by a fourth node and a resource for sending the second message by the first node, the fourth node is a second node that receives the eighth message, and the ninth message is one of the at least one first message sent by the fourth node. Specifically, the first node separately sends an eighth message to each second node in the M second nodes, where first indication information in the eighth message indicates a resource for sending the first message by the fourth node and a resource for first feedback information fed back by the first node based on the first message sent by the fourth node. A resource position for transmitting a message by each second node in each transmission opportunity is unchanged, that is, a corresponding sequence number is provided. The sequence number may be directly indicated by the first node, or may be indicated in another manner. For example, a transmission sequence of the first message is directly determined based on a resource position. Optionally, resource information of the first feedback information that corresponds to the ninth message is indicated based on a sequence number of the ninth message in the N first messages. Specifically, the first node sequentially receives the ninth messages of the second node in a sequence of resource positions indicated by the first indication information, and transmits, on the resource for the second message, the first feedback information corresponding to the ninth message at each resource position based on a sequence number of the resource position indicated by the first indication information.

Specifically, the first indication information may include an event resource indication (a period, a length, a time start point of at least one period (for example, a time offset relative to a predefined reference moment)), a quantity of time domain resource elements (Subevent) in each resource element (Event), and an offset of a resource position of each transmission of the second node in at least one transmission in the Subevent relative to a start point of the Subevent; and may further include a transmission sequence number. The transmission sequence number is a sequence number of each transmission in the Subevent of the second node in at least one transmission in the Subevent.

In the technical solution of this embodiment of this application, the first node sends the second message on the first resource, where the second message also includes the N pieces of first feedback information that are in a one-to-one correspondence with the N first messages sent by the M second nodes, so that the second node can receive desired first feedback information on the first resource. Feedback overheads of the first node are reduced.

The foregoing describes the information transmission method in embodiments of this application, and the following describes an information transmission apparatus for performing the method.

FIG. 4 is a schematic diagram of a structure of an information transmission apparatus according to an embodiment of this application. The apparatus 40 includes:
a receiving unit 401, configured to receive N first messages from M second nodes, where M is an integer greater than 1, and N is an integer greater than or equal to M; and
a sending unit 402, configured to send, by the first node, a second message to the M second nodes on a first resource, where the second message includes N pieces of first feedback information that are in a one-to-one correspondence with the N first messages.

Optionally, the M second nodes are included in a first communication group.

Optionally, the N pieces of first feedback information include an L *N-bit bitmap, every L bits correspond to one piece of first feedback information, and L is an integer greater than or equal to 1.

Optionally, the first message includes a data packet and an identifier of the data packet.

Optionally, fourth feedback information is one of the N pieces of first feedback information, a fifth message is a first message corresponding to the fourth feedback information, and the fourth feedback information includes at least one of the following information:
information indicating that the apparatus successfully receives a data packet carried in the fifth message;
information indicating that the apparatus fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

Optionally, when the fourth feedback information includes the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

Optionally, the receiving unit 401 is further configured to:
receive N third messages from the M second nodes.

The sending unit 402 is further configured to:
send fourth information to the M second nodes on a second resource, where the fourth message includes N pieces of second feedback information that are in a one-to-one correspondence with the N third messages.

Optionally, the receiving unit 401 is specifically configured to:
sequentially receive the N first messages in a sorting sequence, where an s^{th} first message in the N first messages is from a third node, the third node is one node in the M second nodes, and s is an integer greater than 0 and less than or equal to N; and
sequentially receive the N third messages in the sorting sequence, where an s^{th} third message in the N third messages is from the third node.

Optionally, the second message and the N third messages are transmitted on a first time domain resource of a first frequency hopping channel, and the second message is sent before the first node receives the N third messages.

Optionally, the N third messages are determined based on the N pieces of first feedback information that are in a one-to-one correspondence in the second message.

When the fourth feedback information includes the information indicating that the first node successfully receives the data packet carried in the fifth message, a third message corresponding to the fourth feedback information includes a data packet different from the data packet in the fifth message.

Alternatively, when the fourth feedback information includes the information indicating that the first node fails to receive the data packet carried in the fifth message, a third message corresponding to the fourth feedback information includes the data packet in the fifth message.

Alternatively, when the fourth feedback information includes the information indicating that the data packet carried in the fifth message is expected to be sent again, a third message corresponding to the fourth feedback information includes the data packet in the fifth message.

Alternatively, when the fourth feedback information includes the information indicating that the data packet carried in the fifth message is expected not to be sent again, a third message corresponding to the fourth feedback information includes a data packet different from the data packet in the fifth message.

Alternatively, when the fourth feedback information includes the identifier of the data packet expected to be sent, a third message corresponding to the fourth feedback information includes a data packet corresponding to the identifier of the data packet expected to be sent.

Optionally, the first message includes a first part, a second part, and a data part, where the first part is used to transmit a predefined or preconfigured signal, and/or carry a predefined or preconfigured sequence, the second part includes the identifier of the data packet carried in the first message, and the data part includes the data packet carried in the first message.

The second message sequentially includes a third part and a fourth part, where the third part is used to transmit a predefined or preconfigured signal, and/or carry a predefined or preconfigured sequence, and the fourth part includes the N pieces of first feedback information.

Optionally, a sixth message is a k^{th} first message in the N first messages, a seventh message is a k^{th} third message in the N third messages, and k is an integer greater than 0 and less than or equal to N.

If a data packet carried in the sixth message is the same as a data packet carried in the seventh message, an identifier of the data packet carried in the sixth message is the same as an identifier of the data packet carried in the seventh message.

If a data packet carried in the sixth message is different from a data packet carried in the seventh message, an identifier of the data packet carried in the sixth message is different from an identifier of the data packet carried in the seventh message.

Optionally, the sending unit 402 is further configured to:
send an eighth message to the M second nodes, where the eighth message includes first indication information, and the first indication information indicates resources for sending the N first messages by the M second nodes and a resource for sending the second message by the apparatus.

Optionally, resource information of each of the N pieces of first feedback information is indicated by a sequence number of a first message corresponding to each piece of first feedback information in the N first messages.

Optionally, the sending unit 402 is further configured to:
send an eighth message to each of the M second nodes, where the eighth message includes first indication information, the first indication information indicates a resource for sending a ninth message by a fourth node and a resource for first feedback information that corresponds to the ninth message, the fourth node is a second node that receives the eighth message, and the ninth message is one of at least one first message sent by the fourth node.

Optionally, the resource for the first feedback information that corresponds to the ninth message is indicated based on a sequence number of the ninth message in the N first messages.

FIG. 5 is another schematic diagram of a structure of an information transmission apparatus according to an embodiment of this application. The apparatus 50 includes:
a sending unit 501, configured to send at least one first message to a first node; and
a receiving unit 502, configured to receive a second message from the first node on a first resource, where the second message includes N pieces of first feedback information that are in a one-to-one correspondence with N first messages, the N first messages are from M apparatuses, M is an integer greater than 1, N is an integer greater than or equal to M, and the N pieces of first feedback information are determined by the first node based on the N first messages

Optionally, the M apparatuses are included in a first communication group.

Optionally, the N pieces of first feedback information correspond to an L*N-bit bitmap, every L bits correspond to one piece of first feedback information, and L is an integer greater than or equal to 1.

Optionally, the first message includes a data packet and an identifier of the data packet.

Optionally, fourth feedback information is one of the N pieces of first feedback information, a fifth message is a first message corresponding to the fourth feedback information, and the fourth feedback information includes at least one of the following information:
information indicating that the first node successfully receives a data packet carried in the fifth message;
information indicating that the first node fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

Optionally, when the fourth feedback information includes the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

Optionally, the sending unit 501 is further configured to:
send, by a first node, at least one third message.

The receiving unit 502 is further configured to:
receive a fourth message from the first node on a first resource, where the fourth message includes N pieces of second feedback information that are in a one-to-one correspondence with N third messages, and the N third messages are from the M apparatuses.

Optionally, the sending unit 501 is specifically configured to:
send the at least one first message to the first node in a sorting sequence; and
send the at least one third message to the first node in the sorting sequence, where a sequence number of the at least one third message in the N third messages is the same as a sequence number of the at least one first message in the N first messages.

Optionally, the second message and the N third messages are transmitted on a first time domain resource of a first frequency hopping channel, and the at least one third message is sent after the apparatus receives the second message

Optionally, the N third messages are determined based on the N pieces of first feedback information that are in a one-to-one correspondence in the second message.

When the fourth feedback information includes the information indicating that the first node successfully receives the data packet carried in the fifth message, a third message corresponding to the fourth feedback information includes a data packet different from the data packet in the fifth message.

Alternatively, when the fourth feedback information includes the information indicating that the first node fails to receive the data packet carried in the fifth message, a third message corresponding to the fourth feedback information includes the data packet in the fifth message.

Alternatively, when the fourth feedback information includes the information indicating that the data packet carried in the fifth message is expected to be sent again, a third message corresponding to the fourth feedback information includes the data packet in the fifth message.

Alternatively, when the fourth feedback information includes the information indicating that the data packet carried in the fifth message is expected not to be sent again, a third message corresponding to the fourth feedback information includes a data packet different from the data packet in the fifth message.

Alternatively, when the fourth feedback information includes the identifier of the data packet expected to be sent, a third message corresponding to the fourth feedback information includes a data packet corresponding to the identifier of the data packet expected to be sent.

Optionally, the first message includes a first part, a second part, and a data part, where the first part is used to transmit a predefined or preconfigured signal, and/or carry a predefined or preconfigured sequence, the second part includes the identifier of the data packet carried in the first message, and the data part includes the data packet carried in the first message.

The second message sequentially includes a third part and a fourth part, where the third part is used to transmit a predefined or preconfigured signal, and/or carry a predefined or preconfigured sequence, and the fourth part includes the N pieces of first feedback information.

Optionally, a sixth message is a k^{th} first message in the N first messages, a seventh message is a k^{th} third message in the N third messages, and k is an integer greater than 0 and less than or equal to N.

If a data packet carried in the sixth message is the same as a data packet carried in the seventh message, an identifier of the data packet carried in the sixth message is the same as an identifier of the data packet carried in the seventh message.

If a data packet carried in the sixth message is different from a data packet carried in the seventh message, an identifier of the data packet carried in the sixth message is different from an identifier of the data packet carried in the seventh message.

Optionally, the receiving unit 502 is further configured to:
receive an eighth message from the first node, where the eighth message includes first indication information, and the first indication information indicates resources for sending the N first messages by the M apparatuses and a resource for sending the second message by the first node.

Optionally, a resource for each of the N pieces of first feedback information is indicated by a sequence number of a first message corresponding to each piece of first feedback information in the N first messages.

Optionally, the receiving unit 502 is further configured to:
receive an eighth message from the first node, where the eighth message includes first indication information, the first indication information includes a resource for sending a ninth message by the apparatus and a resource for first feedback information that corresponds to the ninth message, and the ninth message is one of the at least one first message.

Optionally, the resource for the first feedback information that corresponds to the ninth message is indicated based on a sequence number of the ninth message in the N first messages.

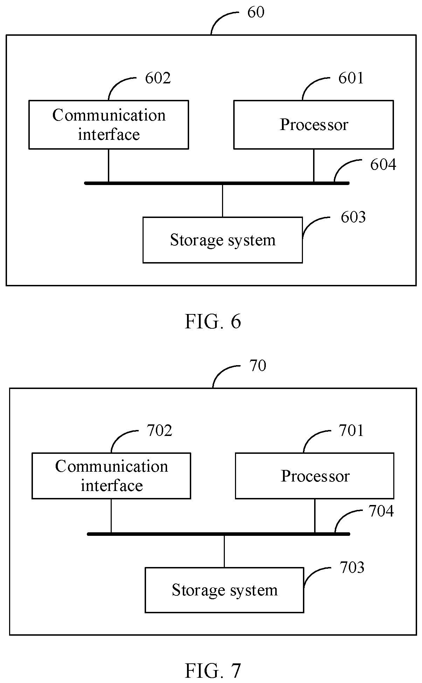

FIG. 6 is a schematic diagram of a possible logical structure of a communication device 60 according to an embodiment of this application. The communication device 60 includes a processor 601, a communication interface 602, a storage system 603, and a bus 604. The processor 601, the communication interface 602, and the storage system 603 are connected to each other by using the bus 604. In this embodiment of this application, the processor 601 is configured to control and manage an action of the communication device 60. For example, the processor 601 is configured to perform the steps performed by the first node in the method embodiment in FIG. 3. The communication interface 602 is configured to support the communication device 60 in performing communication. The storage system 603 is configured to store program code and data of the communication device 60.

The processor 601 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 601 may be a combination of processors implementing a computing function, for example, a combination of one or more microprocessors, or a combination of a digital signal processor and a microprocessor. The bus 604 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of indication, the bus is indicated by using only one bold line in FIG. 6. However, it does not indicate that there is only one bus or only one type of bus.

The receiving unit 401 and the sending unit 402 in the information transmission apparatus 40 are equivalent to the communication interface 602 in the communication device 60.

The communication device 60 in this embodiment may correspond to the first node in the foregoing method embodiment in FIG. 3. The communication interface 602 in the communication device 60 may implement functions and/or various steps implemented by the first node in the foregoing method embodiment in FIG. 3. For brevity, Details are not described herein again.

FIG. 7 is a schematic diagram of a possible logical structure of a communication device 70 according to an embodiment of this application. The communication device 70 includes a processor 701, a communication interface 702, a storage system 703, and a bus 704. The processor 701, the communication interface 702, and the storage system 703 are connected to each other by using the bus 704. In this embodiment of this application, the processor 701 is configured to control and manage an action of the communication device 70. For example, the processor 701 is configured to perform steps performed by the second node in the method embodiment in FIG. 3. The communication interface 702 is configured to support the communication device 70 in performing communication. The storage system 703 is configured to store program code and data of the communication device 70.

The processor 701 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor 701 may be a combination of processors implementing a computing function, for example, a combination of one or more microprocessors, or a combination of a digital signal processor and a microprocessor. The bus 704 may be a peripheral component interconnect (Peripheral Component Interconnect, PCI) bus, an extended industry standard architecture (Extended Industry Standard Architecture, EISA) bus, or the like. Buses may be classified into an address bus, a data bus, a control bus, and the like. For ease of indication, the bus is indicated by using only one bold line in FIG. 7. However, it does not indicate that there is only one bus or only one type of bus.

The sending unit 501 and the receiving unit 502 in the information transmission apparatus 50 are equivalent to the communication interface 702 in the communication device 70.

The communication device 70 in this embodiment may correspond to the second node in the method embodiment in FIG. 3. The communication interface 702 in the communication device 70 may implement functions and/or various steps implemented by the second node in the method embodiment in FIG. 3. For brevity, Details are not described herein again.

In another embodiment of this application, a computer-readable storage medium is further provided. The computer-readable storage medium stores computer-executable instructions. When a processor of a device executes the computer-executable instructions, the device performs the steps of the information transmission method performed by the first node in FIG. 3.

In another embodiment of this application, a computer-readable storage medium is further provided. The computer-readable storage medium stores computer-executable instructions. When a processor of a device executes the computer-executable instructions, the device performs the steps of the information transmission method performed by the second node in FIG. 3.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the information transmission method performed by the first node in FIG. 3.

In another embodiment of this application, a computer program product is further provided. The computer program product includes computer-executable instructions, and the computer-executable instructions are stored in a computer-readable storage medium. When a processor of a device executes the computer-executable instructions, the device performs the steps of the information transmission method performed by the second node in FIG. 3.

It may be clearly understood by a person skilled in the art that, for the purpose of convenient and brief description, for a detailed working process of the foregoing system, apparatus, and unit, reference may be made to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application may essentially or all or part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

## Claims

1. An information transmission method, comprising:
receiving, by a first node, N first messages from M second nodes, wherein M is an integer greater than 1, and N is an integer greater than or equal to M; and
sending, by the first node, a second message to the M second nodes on a first resource, wherein the second message comprises N pieces of first feedback information that are in a one-to-one correspondence with the N first messages

2. The method according to claim 1, wherein the M second nodes are comprised in a first communication group.

3. The method according to claim 1 or 2, wherein the N pieces of first feedback information comprise an L*N-bit bitmap, every L bits correspond to one piece of first feedback information, and L is an integer greater than or equal to 1.

4. The method according to any one of claims 1 to 3, wherein the first message comprises a data packet and an identifier of the data packet.

5. The method according to claim 4, wherein fourth feedback information is one of the N pieces of first feedback information, a fifth message is a first message corresponding to the fourth feedback information, and the fourth feedback information comprises at least one of the following information:
information indicating that the first node successfully receives a data packet carried in the fifth message;
information indicating that the first node fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

6. The method according to claim 5, wherein when the fourth feedback information comprises the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

7. The method according to claim 5 or 6, wherein the method further comprises:
receiving, by the first node, N third messages from the M second nodes; and
sending, by the first node, fourth information to the M second nodes on a second resource, wherein the fourth message comprises N pieces of second feedback information that are in a one-to-one correspondence with the N third messages.

8. The method according to claim 7, wherein the receiving, by a first node, N first messages from M second nodes comprises:
sequentially receiving, by the first node, the N first messages in a sorting sequence, wherein an s^{th} first message in the N first messages is from a third node, the third node is one node in the M second nodes, and s is an integer greater than 0 and less than or equal to N; and
the receiving, by the first node, N third messages from the M second nodes comprises:
sequentially receiving, by the first node, the N third messages in the sorting sequence, wherein an s^{th} third message in the N third messages is from the third node.

9. The method according to claim 7 or 8, wherein the second message and the N third messages are transmitted on a first time domain resource of a first frequency hopping channel, and the second message is sent before the first node receives the N third messages.

10. The method according to any one of claims 7 to 9, wherein the N third messages are determined based on the N pieces of first feedback information that are in a one-to-one correspondence in the second message; and
when the fourth feedback information comprises the information indicating that the first node successfully receives the data packet carried in the fifth message, a third message corresponding to the fourth feedback information comprises a data packet different from the data packet in the fifth message; or
when the fourth feedback information comprises the information indicating that the first node fails to receive the data packet carried in the fifth message, a third message corresponding to the fourth feedback information comprises the data packet in the fifth message; or
when the fourth feedback information comprises the information indicating that the data packet carried in the fifth message is expected to be sent again, a third message corresponding to the fourth feedback information comprises the data packet in the fifth message; or
when the fourth feedback information comprises the information indicating that the data packet carried in the fifth message is expected not to be sent again, a third message corresponding to the fourth feedback information comprises a data packet different from the data packet in the fifth message; or
when the fourth feedback information comprises the identifier of the data packet expected to be sent, a third message corresponding to the fourth feedback information comprises a data packet corresponding to the identifier of the data packet expected to be sent.

11. The method according to any one of claims 1 to 10, wherein the first message comprises a first part, a second part, and a data part, wherein the first part is used to transmit a predefined or preconfigured signal, and/or carry a predefined or preconfigured sequence, the second part comprises the identifier of the data packet carried in the first message, and the data part comprises the data packet carried in the first message; and
the second message sequentially comprises a third part and a fourth part, wherein the third part is used to transmit a predefined or preconfigured signal, and/or carry a predefined or preconfigured sequence, and the fourth part comprises the N pieces of first feedback information.

12. The method according to any one of claims 9 to 11, wherein a sixth message is a k^{th} first message in the N first messages, a seventh message is a k^{th} third message in the N third messages, and k is an integer greater than 0 and less than or equal to N; and
if a data packet carried in the sixth message is the same as a data packet carried in the seventh message, an identifier of the data packet carried in the sixth message is the same as an identifier of the data packet carried in the seventh message; or
if a data packet carried in the sixth message is different from a data packet carried in the seventh message, an identifier of the data packet carried in the sixth message is different from an identifier of the data packet carried in the seventh message.

13. The method according to any one of claims 1 to 12, wherein the method further comprises:
sending, by the first node, an eighth message to the M second nodes, wherein the eighth message comprises first indication information, and the first indication information indicates resources for sending the N first messages by the M second nodes and a resource for sending the second message by the first node.

14. The method according to claim 13, wherein resource information of each of the N pieces of first feedback information is indicated by a sequence number of a first message corresponding to each piece of first feedback information in the N first messages.

15. The method according to any one of claims 1 to 12, wherein the method further comprises:
sending, by the first node, an eighth message to each of the M second nodes, wherein the eighth message comprises first indication information, the first indication information indicates a resource for sending a ninth message by a fourth node and a resource for first feedback information that corresponds to the ninth message, the fourth node is a second node that receives the eighth message, and the ninth message is one of at least one first message sent by the fourth node.

16. The method according to claim 15, wherein the resource for the first feedback information that corresponds to the ninth message is indicated based on a sequence number of the ninth message in the N first messages.

17. An information transmission method, comprising:
sending, by a second node, at least one first message to a first node; and
receiving, by the second node, a second message from the first node on a first resource, wherein the second message comprises N pieces of first feedback information that are in a one-to-one correspondence with N first messages, the N first messages are from M second nodes, M is an integer greater than 1, N is an integer greater than or equal to M, and the N pieces of first feedback information are determined by the first node based on the N first messages.

18. The method according to claim 17, wherein the M second nodes are comprised in a first communication group.

19. The method according to claim 17 or 18, wherein the N pieces of first feedback information correspond to an L*N-bit bitmap, every L bits correspond to one piece of first feedback information, and L is an integer greater than or equal to 1.

20. The method according to any one of claims 17 to 19, wherein the first message comprises a data packet and an identifier of the data packet.

21. The method according to claim 20, wherein fourth feedback information is one of the N pieces of first feedback information, a fifth message is a first message corresponding to the fourth feedback information, and the fourth feedback information comprises at least one of the following information:
information indicating that the first node successfully receives a data packet carried in the fifth message;
information indicating that the first node fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

22. The method according to claim 21, wherein when the fourth feedback information comprises the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

23. The method according to claim 21 or 22, wherein the method further comprises:
sending, by the second node, at least one third message to the first node; and
receiving, by the second node, a fourth message from the first node on the first resource, wherein the fourth message comprises N pieces of second feedback information that are in a one-to-one correspondence with N third messages, and the N third messages are from the M second nodes.

24. The method according to claim 23, wherein the sending, by a second node, at least one first message to a first node comprises:
sending, by the second node, the at least one first message to the first node in a sorting sequence; and
the sending, by the second node, at least one third message to the first node comprises:
sending, by the second node, the at least one third message to the first node in the sorting sequence, wherein a sequence number of the at least one third message in the N third messages is the same as a sequence number of the at least one first message in the N first messages.

25. The method according to claim 23 or 24, wherein the second message and the N third messages are transmitted on a first time domain resource of a first frequency hopping channel, and the at least one third message is sent after the second node receives the second message.

26. The method according to any one of claims 23 to 25, wherein the N third messages are determined based on the N pieces of first feedback information that are in a one-to-one correspondence in the second message; and
when the fourth feedback information comprises the information indicating that the first node successfully receives the data packet carried in the fifth message, a third message corresponding to the fourth feedback information comprises a data packet different from the data packet in the fifth message; or
when the fourth feedback information comprises the information indicating that the first node fails to receive the data packet carried in the fifth message, a third message corresponding to the fourth feedback information comprises the data packet in the fifth message; or
when the fourth feedback information comprises the information indicating that the data packet carried in the fifth message is expected to be sent again, a third message corresponding to the fourth feedback information comprises the data packet in the fifth message; or
when the fourth feedback information comprises the information indicating that the data packet carried in the fifth message is expected not to be sent again, a third message corresponding to the fourth feedback information comprises a data packet different from the data packet in the fifth message; or
when the fourth feedback information comprises the identifier of the data packet expected to be sent, a third message corresponding to the fourth feedback information comprises a data packet corresponding to the identifier of the data packet expected to be sent.

27. The method according to any one of claims 17 to 26, wherein the first message comprises a first part, a second part, and a data part, wherein the first part is used to transmit a predefined or preconfigured signal, and/or carry a predefined or preconfigured sequence, the second part comprises the identifier of the data packet carried in the first message, and the data part comprises the data packet carried in the first message; and
the second message sequentially comprises a third part and a fourth part, wherein the third part is used to transmit a predefined or preconfigured signal, and/or carry a predefined or preconfigured sequence, and the fourth part comprises the N pieces of first feedback information.

28. The method according to any one of claims 25 to 27, wherein a sixth message is a k^{th} first message in the N first messages, a seventh message is a k^{th} third message in the N third messages, and k is an integer greater than 0 and less than or equal to N; and
if a data packet carried in the sixth message is the same as a data packet carried in the seventh message, an identifier of the data packet carried in the sixth message is the same as an identifier of the data packet carried in the seventh message; or
if a data packet carried in the sixth message is different from a data packet carried in the seventh message, an identifier of the data packet carried in the sixth message is different from an identifier of the data packet carried in the seventh message.

29. The method according to any one of claims 17 to 28, wherein the method further comprises:
receiving, by the second node, an eighth message from the first node, wherein the eighth message comprises first indication information, and the first indication information indicates resources for sending the N first messages by the M second nodes and a resource for sending the second message by the first node.

30. The method according to claim 29, wherein a resource for each of the N pieces of first feedback information is indicated by a sequence number of a first message corresponding to each piece of first feedback information in the N first messages.

31. The method according to any one of claims 17 to 28, wherein the method further comprises:
receiving, by the second node, an eighth message from the first node, wherein the eighth message comprises first indication information, the first indication information comprises a resource for sending a ninth message by the second node and a resource for first feedback information that corresponds to the ninth message, and the ninth message is one of the at least one first message.

32. The method according to claim 31, wherein the resource for the first feedback information that corresponds to the ninth message is indicated by a sequence number of the ninth message in the N first messages.

33. An information transmission apparatus, comprising:
a receiving unit, configured to receive N first messages from M second nodes, wherein M is an integer greater than 1, and N is an integer greater than or equal to M; and
a sending unit, configured to send, by the first node, a second message to the M second nodes on a first resource, wherein the second message comprises N pieces of first feedback information that are in a one-to-one correspondence with the N first messages.

34. The apparatus according to claim 33, wherein the M second nodes are comprised in a first communication group.

35. The apparatus according to claim 33 or 34, wherein the N pieces of first feedback information comprise an L*N-bit bitmap, every L bits correspond to one piece of first feedback information, and L is an integer greater than or equal to 1.

36. The apparatus according to any one of claims 33 to 35, wherein the first message comprises a data packet and an identifier of the data packet.

37. The apparatus according to claim 36, wherein fourth feedback information is one of the N pieces of first feedback information, a fifth message is a first message corresponding to the fourth feedback information, and the fourth feedback information comprises at least one of the following information:
information indicating that the apparatus successfully receives a data packet carried in the fifth message;
information indicating that the apparatus fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

38. The apparatus according to claim 37, wherein when the fourth feedback information comprises the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

39. The apparatus according to claim 37 or 38, wherein the receiving unit is further configured to:
receive N third messages from the M second nodes; and
the sending unit is further configured to:
send fourth information to the M second nodes on a second resource, wherein the fourth message comprises N pieces of second feedback information that are in a one-to-one correspondence with the N third messages.

40. The apparatus according to claim 39, wherein the receiving unit is specifically configured to:
sequentially receive the N first messages in a sorting sequence, wherein an s^{th} first message in the N first messages is from a third node, the third node is one node in the M second nodes, and s is an integer greater than 0 and less than or equal to N; and
sequentially receive the N third messages in the sorting sequence, wherein an s^{th} third message in the N third messages is from the third node.

41. The apparatus according to claim 39 or 40, wherein the second message and the N third messages are transmitted on a first time domain resource of a first frequency hopping channel, and the second message is sent before the first node receives the N third messages.

42. The apparatus according to any one of claims 39 to 41, wherein the N third messages are determined based on the N pieces of first feedback information that are in a one-to-one correspondence in the second message; and
when the fourth feedback information comprises the information indicating that the first node successfully receives the data packet carried in the fifth message, a third message corresponding to the fourth feedback information comprises a data packet different from the data packet in the fifth message; or
when the fourth feedback information comprises the information indicating that the first node fails to receive the data packet carried in the fifth message, a third message corresponding to the fourth feedback information comprises the data packet in the fifth message; or
when the fourth feedback information comprises the information indicating that the data packet carried in the fifth message is expected to be sent again, a third message corresponding to the fourth feedback information comprises the data packet in the fifth message; or
when the fourth feedback information comprises the information indicating that the data packet carried in the fifth message is expected not to be sent again, a third message corresponding to the fourth feedback information comprises a data packet different from the data packet in the fifth message; or
when the fourth feedback information comprises the identifier of the data packet expected to be sent, a third message corresponding to the fourth feedback information comprises a data packet corresponding to the identifier of the data packet expected to be sent.

43. The apparatus according to any one of claims 33 to 42, wherein the first message comprises a first part, a second part, and a data part, wherein the first part is used to transmit a predefined or preconfigured signal, and/or carry a predefined or preconfigured sequence, the second part comprises the identifier of the data packet carried in the first message, and the data part comprises the data packet carried in the first message; and
the second message sequentially comprises a third part and a fourth part, wherein the third part is used to transmit a predefined or preconfigured signal, and/or carry a predefined or preconfigured sequence, and the fourth part comprises the N pieces of first feedback information.

44. The apparatus according to any one of claims 41 to 43, wherein a sixth message is a k^{th} first message in the N first messages, a seventh message is a k^{th} third message in the N third messages, and k is an integer greater than 0 and less than or equal to N; and
if a data packet carried in the sixth message is the same as a data packet carried in the seventh message, an identifier of the data packet carried in the sixth message is the same as an identifier of the data packet carried in the seventh message; or
if a data packet carried in the sixth message is different from a data packet carried in the seventh message, an identifier of the data packet carried in the sixth message is different from an identifier of the data packet carried in the seventh message.

45. The apparatus according to any one of claims 33 to 44, wherein the sending unit is further configured to:
send an eighth message to the M second nodes, wherein the eighth message comprises first indication information, and the first indication information indicates resources for sending the N first messages by the M second nodes and a resource for sending the second message by the apparatus.

46. The apparatus according to claim 45, wherein resource information of each of the N pieces of first feedback information is indicated by a sequence number of a first message corresponding to each piece of first feedback information in the N first messages.

47. The apparatus according to any one of claims 33 to 44, wherein the sending unit is further configured to:
send an eighth message to each of the M second nodes, wherein the eighth message comprises first indication information, the first indication information indicates a resource for sending a ninth message by a fourth node and a resource for first feedback information that corresponds to the ninth message, the fourth node is a second node that receives the eighth message, and the ninth message is one of at least one first message sent by the fourth node.

48. The apparatus according to claim 47, wherein the resource for the first feedback information that corresponds to the ninth message is indicated based on a sequence number of the ninth message in the N first messages.

49. An information transmission apparatus, comprising:
a sending unit, configured to send at least one first message to a first node; and
a receiving unit, configured to receive a second message from the first node on a first resource, wherein the second message comprises N pieces of first feedback information that are in a one-to-one correspondence with N first messages, the N first messages are from M apparatuses, M is an integer greater than 1, N is an integer greater than or equal to M, and the N pieces of first feedback information are determined by the first node based on the N first messages.

50. The apparatus according to claim 49, wherein the M apparatuses are comprised in a first communication group.

51. The apparatus according to claim 49 or 50, wherein the N pieces of first feedback information correspond to an L*N-bit bitmap, every L bits correspond to one piece of first feedback information, and L is an integer greater than or equal to 1.

52. The apparatus according to any one of claims 49 to 51, wherein the first message comprises a data packet and an identifier of the data packet.

53. The apparatus according to claim 52, wherein fourth feedback information is one of the N pieces of first feedback information, a fifth message is a first message corresponding to the fourth feedback information, and the fourth feedback information comprises at least one of the following information:
information indicating that the first node successfully receives a data packet carried in the fifth message;
information indicating that the first node fails to receive a data packet carried in the fifth message;
information indicating that a data packet carried in the fifth message is expected to be sent again;
information indicating that a data packet carried in the fifth message is expected not to be sent again; or
an identifier of a data packet expected to be sent.

54. The apparatus according to claim 53, wherein when the fourth feedback information comprises the identifier of the data packet expected to be sent,
if the identifier of the data packet expected to be sent is the same as an identifier of the data packet in the fifth message, the fourth feedback information indicates that the data packet carried in the fifth message is expected to be sent again; or
if the identifier of the data packet expected to be sent is different from an identifier of the fifth message, the fourth feedback information indicates that the data packet carried in the fifth message is expected not to be sent again.

55. The apparatus according to claim 53 or 54, wherein the sending unit is further configured to:
send, by the first node, at least one third message; and
the receiving unit is further configured to:
receive a fourth message from the first node on a first resource, wherein the fourth message comprises N pieces of second feedback information that are in a one-to-one correspondence with N third messages, and the N third messages are from the M apparatuses.

56. The apparatus according to claim 55, wherein the sending unit is specifically configured to:
send the at least one first message to the first node in a sorting sequence; and
send the at least one third message to the first node in the sorting sequence, wherein a sequence number of the at least one third message in the N third messages is the same as a sequence number of the at least one first message in the N first messages.

57. The apparatus according to claim 55 or 56, wherein the second message and the N third messages are transmitted on a first time domain resource of a first frequency hopping channel, and the at least one third message is sent after the apparatus receives the second message.

58. The apparatus according to any one of claims 55 to 57, wherein the N third messages are determined based on the N pieces of first feedback information that are in a one-to-one correspondence in the second message; and
when the fourth feedback information comprises the information indicating that the first node successfully receives the data packet carried in the fifth message, a third message corresponding to the fourth feedback information comprises a data packet different from the data packet in the fifth message; or
when the fourth feedback information comprises the information indicating that the first node fails to receive the data packet carried in the fifth message, a third message corresponding to the fourth feedback information comprises the data packet in the fifth message; or
when the fourth feedback information comprises the information indicating that the data packet carried in the fifth message is expected to be sent again, a third message corresponding to the fourth feedback information comprises the data packet in the fifth message; or
when the fourth feedback information comprises the information indicating that the data packet carried in the fifth message is expected not to be sent again, a third message corresponding to the fourth feedback information comprises a data packet different from the data packet in the fifth message; or
when the fourth feedback information comprises the identifier of the data packet expected to be sent, a third message corresponding to the fourth feedback information comprises a data packet corresponding to the identifier of the data packet expected to be sent.

59. The apparatus according to any one of claims 49 to 58, wherein the first message comprises a first part, a second part, and a data part, wherein the first part is used to transmit a predefined or preconfigured signal, and/or carry a predefined or preconfigured sequence, the second part comprises the identifier of the data packet carried in the first message, and the data part comprises the data packet carried in the first message; and
the second message sequentially comprises a third part and a fourth part, wherein the third part is used to transmit a predefined or preconfigured signal, and/or carry a predefined or preconfigured sequence, and the fourth part comprises the N pieces of first feedback information.

60. The apparatus according to any one of claims 57 to 59, wherein a sixth message is a k^{th} first message in the N first messages, a seventh message is a k^{th} third message in the N third messages, and k is an integer greater than 0 and less than or equal to N; and
if a data packet carried in the sixth message is the same as a data packet carried in the seventh message, an identifier of the data packet carried in the sixth message is the same as an identifier of the data packet carried in the seventh message; or
if a data packet carried in the sixth message is different from a data packet carried in the seventh message, an identifier of the data packet carried in the sixth message is different from an identifier of the data packet carried in the seventh message.

61. The apparatus according to any one of claims 49 to 60, wherein the receiving unit is further configured to:
receive an eighth message from the first node, wherein the eighth message comprises first indication information, and the first indication information indicates resources for sending the N first messages by the M apparatuses and a resource for sending the second message by the first node.

62. The apparatus according to claim 61, wherein a resource for each of the N pieces of first feedback information is indicated by a sequence number of a first message corresponding to each piece of first feedback information in the N first messages.

63. The apparatus according to any one of claims 49 to 60, wherein the receiving unit is further configured to:
receive an eighth message from the first node, wherein the eighth message comprises first indication information, the first indication information comprises a resource for sending a ninth message by the apparatus and a resource for first feedback information that corresponds to the ninth message, and the ninth message is one of the at least one first message

64. The apparatus according to claim 63, wherein the resource for the first feedback information that corresponds to the ninth message is indicated by a sequence number of the ninth message in the N first messages.

65. A communication device, comprising a processor and a memory, wherein
the processor is configured to execute instructions stored in the memory, to enable the communication device to perform the method according to any one of claims 1 to 16.

66. A communication device, comprising a processor and a memory, wherein
the processor is configured to execute instructions stored in the memory, to enable the communication device to perform the method according to any one of claims 17 to 32.

67. A computer-readable storage medium, wherein the computer-readable storage medium stores a computer program, and when the computer program is run on a computer, the computer is enabled to perform the method according to any one of claims 1 to 32.

68. A computer program product, wherein when the computer program product is executed on a computer, the computer performs the method according to any one of claims 1 to 32.
